# EUROPEAN PATENT APPLICATION

(11) **EP 4 579 299 A1**
(43) Date of publication of application: **02.07.2025**
(21) Application number: 24219313.4
(22) Date of filing: 12.12.2024
(51) Int. Cl.: G02B 6/30, G02B 6/36

(54) **FIBER-WAVEGUIDE COUPLER AND METHOD FOR MANUFACTURING**

(30) Priority: 28.12.2023 DE 102023136803
(71) Applicant: LiGenTec SA, 1024 Ecublens (CH)
(72) Inventor: JAFFAL, Moustapha Maxime, 91100 Corbeil Essonnes (FR); MAY, Stuart James, 1025 Saint-Sulpice Vaud (CH)
(74) Representative: Isarpatent

(57) **Abstract**

The present invention provides a fiber-waveguide coupler (1), comprising a crystalline substrate (2) of a 〈100〉 type having a top surface (2a) and a crystallographic 〈100〉 plane (2100),the crystalline substrate (2) comprising: a V-groove (3) extending in a Z-direction (Z) in a projection towards the top surface (2a), wherein the Z-direction (Z) is within a 〈110〉 crystallographic plane (2110) of the crystalline substrate (2), wherein the top surface (2a) and a 〈100〉 crystallographic plane (2110) of the crystalline substrate (2) open a first angle (α1) in a X/Y-plane (XY) normal to the Z-direction(Z), and an optical waveguide (4) disposed on the top surface (2a) of the crystalline substrate(2), the optical waveguide (4) extending along the Z-direction (Z) in a projection towards the top surface, wherein the V-groove (3) and the optical waveguide (4) are configured such that when an optical fiber (5) of predetermined size and having a fiber core (51) and a fiber tip (52), set into the V-groove (3) such that a distance between an outer end (42) of the waveguide core (4) and the fiber tip (52) is less than a predetermined distance (d), the fiber core (51) is aligned with the waveguide core (41) such that a displacement of the fiber core (51) and the waveguide core (41) is less than a predetermined displacement. Further the present invention provides a method for manufacturing a fiber-waveguide coupler (1) as well as.

## Description

### TECHNICAL FIELD OF THE INVENTION

The invention relates to a fiber-waveguide coupler as well as to a method for manufacturing a fiber-waveguide coupler.

### TECHNICAL BACKGROUND

The manufacturing process of photonic integrated circuits (PIC) recently relies on the strategic use of anisotropic etching using wet etching with e.g. TMAH to create V-Grooves, which serve as entry points for the optical fibers within the PIC. However, achieving precise alignment between the V-Groove direction and the optical waveguide in PIC poses a significant challenge.

An obstacle arises from a misalignment between the crystalline plane (110) and a processing direction indicated or aligned e.g. by a wafer notch. Consequently, the lithography and etching processes for SiN waveguides can be aligned meticulously with the plane perpendicular to the processing direction. The misalignment between the crystalline plane (110) and the wafer notch wafer can introduce uncertainties in the orientation of V-Grooves, impacting their alignment with the waveguide direction. A secondary factor to the alignment is the tilted orientation of the wafer surface with respect to the (100) Si crystalline plane. This orientation difference leads to a misalignment between the center of the optical fiber and the optical waveguide. This misalignment can be determined by an angle orthogonal to the direction of the V-groove or by another angle in a plane parallel to the V-groove and orthogonal the top surface, depending on the direction of the tilted wafer surface with respect to the (100) Si crystalline plane.

Therefore, it is an objective of the invention to provide a V-groove and an optical waveguide such that a core of an optical fiber having known dimension is well aligned to the optical waveguide.

### SUMMARY OF THE INVENTION

According to the invention, this problem is solved in each case by the subject matters of the independent claims.

According to a first aspect of the invention, a fiber-waveguide coupler is provided. The fiber-waveguide coupler comprises a crystalline substrate of a (100) type having a top surface and a crystallographic (100) plane, the crystalline substrate comprising: a V-groove extending in a Z-direction in a projection towards the top surface, wherein the Z-direction is within a (110) crystallographic plane of the crystalline substrate, wherein the top surface and a (100) crystallographic plane of the crystalline substrate open a first angle in a X/Y-plane normal to the Z-direction, wherein the V-groove has a first inclined surface and a second inclined surface opposing the first inclined surface, and an optical waveguide disposed on the top surface of the crystalline substrate, the optical waveguide having a waveguide core extending along the Z-direction in a projection towards the top surface, wherein the V-groove and the optical waveguide are configured such that when an optical fiber of predetermined size and having a fiber core and a fiber tip is set into the V-groove such that a distance between an outer end of the waveguide core and the fiber tip is less than a predetermined distance, the fiber core is aligned with the waveguide core such that a displacement of the fiber core and the waveguide core is less than a predetermined displacement.

According to a second aspect of the invention, a method for manufacturing a fiber-waveguide coupler is provided. The method for manufacturing a fiber-waveguide coupler comprises etching a reference V-groove into a top surface of a crystalline substrate of a (100) type by anisotropic etching, wherein the anisotropic etching is conducted such that reference V-groove extends along a Z-direction in a projection towards the top surface, wherein the Z-direction is within a (110) crystallographic plane of the crystalline substrate; etching a primary marker extending along a reference direction into the top surface, determining a reference angle between the Z-direction and the reference direction; determining a first angle between the top surface and a (100) crystallographic plane of the crystalline substrate in a projection towards a X/Y-plane normal to the Z-direction, and/or determining a second angle between the top surface and the (100) crystallographic plane in an Y/Z-plane normal to the X-direction; fabricating an optical waveguide on the top surface of the crystalline substrate based on the reference angle such that a fiber core of an optical fiber having predetermined dimensions being set into the second V-groove is aligned with a waveguide core of the optical waveguide, and etching a second V-groove into the top surface by anisotropic etching, wherein a width of the second V-groove at the top surface in an X-direction and a depth of the second V-groove in the Y-direction from the top surface is set based on the determined first angle and/or the second angle.

A fundamental idea of the present invention is to adapt a fabrication of the V-groove of a fiber-waveguide coupler such that a fiber placed in the V-groove is aligned with the waveguide core of the waveguide on the crystalline substrate reliably within the tolerances of the crystallographic axes in a provided crystalline substrate of a (100) type. A critical part of this alignment refers to the X/Y-plane, which is substantially normal to the V-groove and the optical fiber set into the V-groove.

A fundamental concept of the invention is to determine a misalignment between the (100) crystallographic plane and the top surface of a crystalline substrate of the (100) type, in particular in the direction normal to the fiber and the V-groove. A crystalline substrate of the (100) type refers to a crystalline substrate, e.g. made by silicon, whose top surface is supposed to be a (100) crystallographic plane. However, due to manufacturing tolerances, the top surface often is not exactly a (100) crystallographic plane. To determine such a misalignment, a primary marker extending in a reference direction is fabricated by etching into the substrate. The reference direction can be, e.g., an initial operation direction. The initial direction can be completely arbitrary, however, it may be indicated by a wafer notch, which typically indicates the (110) crystallographic plane of the (100)-type crystalline su bstrate.

Before or after the fabrication of the primary marker, a reference V-groove is fabricated by anisotropic etching into the top surface. By such an etching, e.g. using TMAH or KOH as etchant, a V-groove can be fabricated, the V-groove, i.e. the trench axis at the bottom of the V-groove between the two inclined surfaces, extending along a direction in the (110) crystallographic plane of the crystalline substrate. The reference V-groove can be etched at any other place of the substrate, preferably near the primary marker to facilitate the determination of the angular misalignment of the reference direction to the V-groove, i.e. the reference angle. The Z-direction is thus defined as the direction of the reference V-groove in a projection towards the surface. The direction normal to the top surface is defined as the Y-direction, which is orthogonal to the Z-direction. The X-direction extends along the top surface and is orthogonal to Y- and Z-direction.

By these two structures, the reference angle is determined between the reference direction and the Z-direction, which can be observed from a plane view above the top surface. This reference angle can be measured by observation e.g. by a microscope, such as a Critical-Dimension Scanning Electron Microscope (CDSEM).

A first angle indicating the misalignment of the (100) crystallographic plane to the top surface in a plane normal to the Z-direction, i.e. X/Y-plane is determined by observing the reference groove. In case of a misalignment of the top surface to the (100) crystallographic plane, an asymmetric V-groove will be etched. This means that a width of a first inclined surface of the reference V-groove in a projection towards the top surface differs from a width of a second inclined surface of the reference V-groove opposing the first inclined surface in a projection towards the top surface. By measuring these widths and/or their difference, it is possible to derive the misalignment between top surface and (100) crystallographic plane normal to the Z-direction. This angle is referred to as the first angle.

Furthermore, depending on the direction of the misalignment of the the (100) crystallographic plane with respect to the top surface of the wafer, a second angle between the top surface and the (100) crystallographic plane in an Y/Z-plane along the V-groove normal to the X-direction. This second angle causes a misalignment of the fiber core with respect to the waveguide core in the Y-direction orthogonal to the top surfce of the substrate. The etching of the second V-groove has to compensate for this second angle such that the width of the second V-groove is gradually varying based on the determined second angle for optimum alignment.

Knowing these angles, the resulting manufacturing step can be adjusted based on this angle. By fabricating the optical waveguide onto the substrate, the reference angle is considered in order to achieve a proper orientation of the optical waveguide to the optical fiber set in a second V-groove. Setting the optical fiber into the V-groove means that a cladding of the fiber is in contact with the first and second inclined surfaces. This second V-groove is etched such that a depth and a position of the V-groove are adjusted or corrected by considering the first angle. If no adjustment would be conducted, due to the described misalignment the V-groove generally would be too deep for the optical waveguide fabricating at a predetermined height above the top surface to match with a fiber core of an optical fiber of predetermined size or dimensions. By adjusting an amount of the etchant, a depth of the groove is thus reduced to compensate for the misalignment of the planes.

A fiber of a predetermined size means that the dimensions of the fiber are known. For example, the diameter of the fiber core and fiber cladding are considered to be of a standard single mode fiber, such as a SMF-28 (e.g. SMF-28 ULL from Corning) having a core diameter of about 8 µm and a cladding diameter of 125 µm. Preferably as will be further explained, the first and second inclined surfaces may be in a (111) crystallographic plane of the crystalline substrate.

The depth is the distance from the top surface to the trench axis of the groove in the Y-direction, which is a vertical direction if the top surface is a horizontal plane. For the fabricationof the optical waveguide on the crystalline substrate, methods known in the field of lithography may be used. Such fabrication typically involves several fabrication steps starting with a deposition e.g. of an oxide, followed by lithography and etching.

It is noted that the final manufactured fiber-waveguide coupler may also include the primary marker and the reference V-groove. The optical waveguide may also be fabricated on top of the primary marker and/or the reference V-groove. Alternatively, the primary marker and the reference V-groove have been fabricated at a remote place of the substrate and been cut apart from the fiber-waveguide coupler.

By the fiber-waveguide coupler manufactured as described above, setting the optical fiber at the predetermined distance, e.g. less than 3 µm, preferably between 1.5 µm and 2.5 µm, from the end of the waveguide, the fiber core is aligned with the waveguide core. That means, a plane orthogonal to the fiber core and/or the waveguide core, a displacement is less than a predetermined displacement, which can be less than 0.2 µm or 0.2 µm, preferably 0.05 µm.

A particular advantage in the solution according to an aspect of the invention is that the method provides a reliable fiber-waveguide coupler with reliable performance, independent of the orientation of the crystallographic planes in the (100)-type crystalline substrate (at least within typical tolerances of such a substrate). In this way, a reliable fiber-waveguide coupler can be provided for coupling light from an optical fiber to an optical waveguide as part of a photonic integrated circuit, or vice-versa.

The crystallographic planes (100), (110), and (111) denoted as before are in line with the Miller indices typically used in this field. In particular, indices in angle brackets such as (100) denote a family of directions which are equivalent due to symmetry operations, such as [100], [010], [001] or the negative of any of those directions. Furthermore, having a first angle, a second angle or any other angle with respect to such crystallographic planes means that the concerned angle is greater than 0, preferably greater than 0.05°, if not stated otherwise.

According to some further aspects of the fiber-waveguide coupler according to the invention, the top surface and a (100) crystallographic plane of the crystalline substrate open a second angle in a Y/Z-plane. The Y/Z-plane is opened by a normal to the top surface and the Z-direction, wherein a width of the V-groove at the top surface varies along its length according to the second angle. The variation along its length is in particular gradually so that the trench axis at the bottom of the V-groove follows the second angle with respect to the top surface. In this way, a misalignment of the (100) crystallographic plane to the top surface in the V-groove direction can be compensated in all directions for optimum alignment.

According to some further aspects of the fiber-waveguide coupler according to the invention, the V-groove has a first inclined surface and a second inclined surface opposing the first inclined surface, the trench axis of the second V-groove, at which the first and second inclined surfaces meet, is in a (100) crystallographic plane of the crystalline substrate. According to this aspect, the waveguide core may extend parallel to the top surface at a predetermined height. Furthermore, the waveguide core may also extend along a (100) crystallographic plane, thus being parallel to the trench axis of the V-groove.

According to some further aspects of the method according to the invention, the reference V-groove includes a first inclined surface and a second inclined surface opposing the first inclined surface, wherein the anisotropic etching is conducted such that the first and second inclined surfaces are in a (111) crystallographic planes of the crystalline substrate. In this way, a fixed direction of the second V-groove can be achieved that can be reliably fabricated.

According to some embodiments of the method according to the invention, etching a second V-groove includes: calculating a depth displacement of the second V-groove based on the determined first angle. With this information, an amount of etchant can be adjusted based on the calculated depth displacement. The adjusted amount of etchant can then be applied in the etching of the second V-groove. In this way, the second V-groove can be fabricated such that it compensates the misalignment of the top surface to the (100) crystallographic plane of the crystalline su bstrate.

According to some embodiments of the method according to the invention, wherein fabricating the optical waveguide includes setting an orientation of an etching mask on the top surface based on the determined reference angle, and fabricating the optical waveguide such that a waveguide core of the optical waveguide is extending along the Z-direction in a projection towards the top surface. In this way, the optical waveguide can be aligned to the V-groove in the (110) crystallographic plane, which is found very reliable for manufacturing.

According to some embodiments of the method according to the invention, fabricating the optical waveguide includes: calculating a first X-displacement based on the determined reference angle, and fabricating the optical waveguide such that a waveguide core of the optical waveguide is positioned based on the first X-displacement. This improves the alignment accuracy of the fiber core to the waveguide core.

According to some embodiments of the method according to the invention, fabricating the optical waveguide includes: calculating a second X-displacement based on the corrected depth, and fabricating the optical waveguide such that the waveguide core of the optical waveguide is positioned based on the second X-displacement. By the compensation of the depth, another displacement in the X-direction occurs due to the assymetric shape of the V-groove. This further step compensates for this additional displacement in the X-direction so that the alignment accuracy is increased, thus reducing coupling losses of light coupling from the fiber core to the waveguide core or vice versa.

According to some embodiments of the method according to the invention, fabricating the optical waveguide includes: fabricating the optical waveguide such that the waveguide core is arranged along the Z-direction in a projection towards the top surface. As described above, methods used in lithography may be applied for this fabrication step. The waveguide core may extend parallel to the top surface at a predetermined height. This would be the simplest way to manufacture the optical waveguide. Alternatively or in addition, the waveguide core may extend, at least partly, in particular near the end of the waveguide towards the second V-groove, along a (100) crystallographic plane, thus being parallel to the trench axis of the V-groove and an optical fiber set the second groove. As a result, the light coupling efficiency of the light propagating from the fiber core into the waveguide core, or vice versa, is enhanced.

According to some embodiments of the method according to the invention, etching the second V-groove includes: etching the second V-groove such that a trench axis, at which the first and second inclined surfaces of the second V-groove meet, is in a (100) crystallographic plane of the crystalline substrate. In this case, the trench axis of the second V-groove is in the (110) crystallographic plane as well. In this way, a fixed direction of the second V-groove can be achieved that can be reliably fabricated.

The above embodiments and further developments can be combined with each other as desired, if appropriate. In particular, all features of the fiber-waveguide coupler are transferable to the method for manufacturing the fiber-waveguide coupler, and vice versa. Other possible aspects, further developments and implementations of the invention also include combinations of features of the invention described above or below with regard to the embodiment examples that are not explicitly mentioned. In particular, the skilled person will also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
- Fig. 1: shows a schematic illustration of a V-groove for a fiber-waveguide coupler according to an embodiment of the invention;
- Fig. 2: shows a schematic illustration of a reference V-groove for a fiber-waveguide coupler according to an embodiment of the invention;
- Fig. 3: shows a cross section of a V-groove for a fiber-waveguide coupler according to an embodiment of the invention;
- Fig. 4a-c: show a top view and cross sections of a fiber-waveguide coupler according to an embodiment of the invention;
- Fig. 5: shows a flow chart for a method for manufacturing of a fiber-waveguide coupler according to an embodiment of the invention;
- Fig. 6a-d: show a cross sections of a V-groove of a fiber-waveguide coupler according to a further embodiment of the invention;
- Fig. 7: shows a schematic illustration of an exemplary fiber-waveguide coupler for illustration purposes;
- Fig. 8: shows a schematic illustration of a fiber-waveguide coupler according to a further embodiment of the invention;
- Fig. 9: shows a top view of an exemplary reference V-groove for illustration purposes; and
- Fig. 10: shows a top view of a V-groove of a fiber-waveguide coupler according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

### DESCRIPTION OF EMBODIMENTS

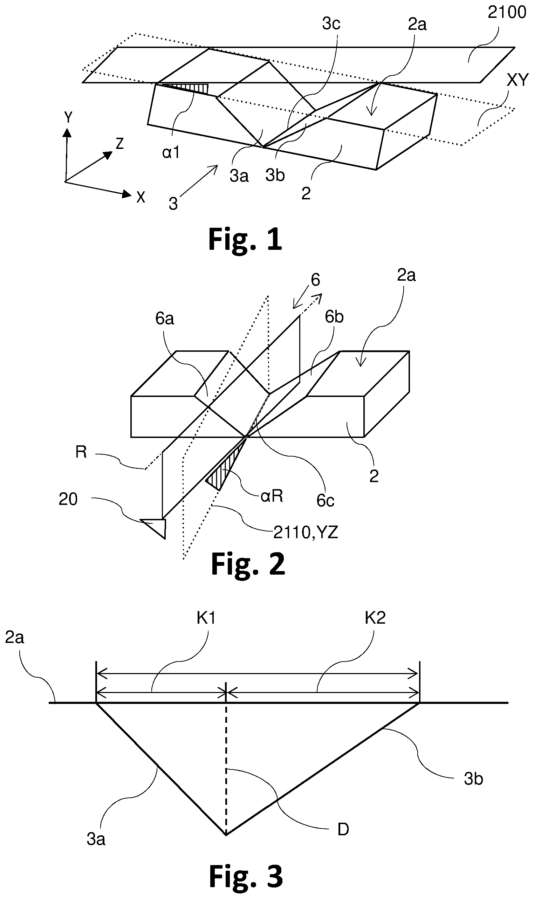

Fig. 1 shows a schematic illustration of a V-groove 3 for a fiber-waveguide coupler 1 according to an embodiment of the invention.

Fig. 1 shows a crystalline substrate 2 of a (100) type having a top surface 2a and a crystallographic (100) plane 2100. In the crystalline substrate, a V-groove 3 is fabricated, which is extending in a Z-direction Z in this case. The Z-direction Z is within a (110) crystallographic plane 2110 of the crystalline substrate 2. The V-groove 3 has a first inclined surface 3a and a second inclined surface 3b opposing the first inclined surface 3a.

In Fig. 1, it is shown that the top surface 2a and a (100) crystallographic plane 2100 of the crystalline substrate 2 open a first angle α1 in a X/Y-plane XY normal to the Z-direction Z. This can be a result of the manufacturing tolerance of the substrate 2 or the corresponding wafer, that may be in the range of more than 0.1° and reach up to 1°, 1.5° or more.

Fig. 2 shows a schematic illustration of a reference V-groove 6 for a fiber-waveguide coupler 1 according to an embodiment of the invention.

Fig. 2 shows another issue that has to be considered when manufacturing a V-groove in a crystalline substrate 2 of a (100) type. Having a reference direction R, which can be arbitrary or e.g. indicated by a notch 20 of a wafer of the crystalline substrate 2, a reference V-groove 6 can be manufactured by anisotropic etching. Such the anisotropic etching, e.g. using TMAH or KOH is conducted such that the direction of a trench axis 6c where first and second inclined surfaces 6a, 6b meet, of the reference V-groove 6 extends along a Z-direction Z, at least in a projection towards the top surface 2a of the substrate. By the nature of this anisotropic etching, the Z-direction is extending in a (110) crystallographic plane 2110 of the crystalline substrate 2. The Z-direction of the so manufactured groove and the reference direction R generally differ from each other so that adjustments are needed, e.g. to dispose of the optical waveguide 4 in the correct orientation, as will be explained later.

In order to get an indication of the misalignment between the reference direction and the Z-direction, a primary marker 7 (not shown in Fig. 2) extending along a reference direction R is etched into the top surface 2a, as will be described later in detail.

Fig. 3 shows a cross section of a V-groove for a fiber-waveguide coupler according to an embodiment of the invention.

Fig. 3 shows such an asymmetric V-groove 3 due to the existing first angle α1. In this cross section in the X/Y plane XY, the V-groove 3 has a shorter first inclined surface 3a compared to a second inclined surface 3b. A depth D from the top surface 2a to the trench axis 3c is deeper than it would be with a first angle α1 equal to zero. It follows that a width K1 of a first inclined surface 3a of the V-groove 3 in a projection towards the top surface 2a differs from a width K2 of a second inclined surface 3b of the reference V-groove 3 in a projection towards the top surface 2a. In the example shown in Fig. 3, the width K1 of a first inclined surface 3a in a projection towards the top surface 2a is greater than the width K2 of the second inclined surface 3b in a projection towards the top surface 2a. By measuring these widths K1, LK2 and/or their difference, it is possible to derive the first angle α1, i.e. the misalignment between top surface and (100) crystallographic plane normal to the Z-direction. These widths K1, K2 can be measured by observation e.g. by a microscope, such as a Critical-Dimension Scanning Electron Microscope CDSEM.

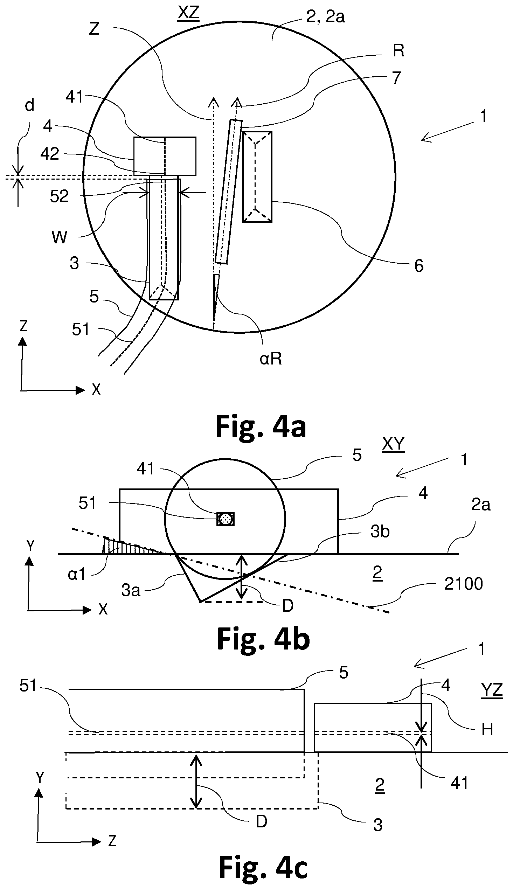

Fig. 4a-c show a top view and cross sections of a fiber-waveguide coupler 1 according to an embodiment of the invention.

Fig. 4a is a top view in a X/Z-plane XZ on a fiber waveguide coupler 1 manufactured on a crystalline substrate 2 configured as a wafer. Fig. 4b showing a cross section in the X/Y-plane XY near a fiber tip 52 of the fiber 5 and an end 42 of the optical waveguide 4. Fig. 4c showing a cross section of the fiber-waveguide coupler in the Y/-plane YZ.

The fiber-waveguide coupler 1 comprises the crystalline substrate 2 of a (100) type having a top surface 2a and a crystallographic (100) plane 2100. The substrate can be any suitable crystalline substrate, preferably made from silicon, Si, but may also be made of other semiconductor materials, such as GaAs or InP.

The crystalline substrate 2 comprises a V-groove 3 extending in a Z-direction Z in a projection towards the top surface 2a. The Z-direction Z is within a (110) crystallographic plane 2110 of the crystalline substrate 2. The top surface 2a and a (100) crystallographic plane 2110 of the crystalline substrate 2 open a first angle α1 in a X/Y-plane XY normal to the Z-direction Z.

Furthermore, next to the V-groove, an optical waveguide 4 disposed on the top surface 2a of the crystalline substrate 2, the optical waveguide 4 extending along the Z-direction Z.

The V-groove 3 and the optical waveguide 4 are configured such that when an optical fiber 5 of predetermined size and having a fiber core 51 and a fiber tip 52, set into the V-groove 3 such that a distance between an outer end 42 of the waveguide core 4 and the fiber tip 52 is less than a predetermined distanced. In some embodiments, the predetermined distance may be 3 µm or between 1.5 mm and 3 mm. It can be seen in Fig. 4a that the fiber core 51 and the waveguide core 41 are aligned such that an optical loss is generally minimized. This means that a displacement in a projection towards the X/Y-plane XY normal to the Z-direction Z is e.g. less than 0.1 µm, e.g. 0,05 µm. In some embodiments, the displacement is even less than 0.01 µm. In Fig. 4b showing a cross section in the X/Y-plane XY, it can be seen that there is virtually no displacement between the fiber core 51 and the waveguide core 41. Leading to optimum light coupling between these two elements.

Furthermore, a reference groove 6 extending in the Z-direction Z and a primary marker 7 extending in a reference direction R are shown in Fig. 4a. As described above, the reference direction R may be an initial operation direction of the manufacturing apparatus. In order to achieve the second V-groove 3 and the extending in the Z-direction optical waveguide 4 with its core extending in the Z-direction, an orientation of an etching mask on the top surface based on the determined reference angle αR is aligned. Although the reference groove 6 and the primary marker 7 are shown to be next to the essential elements (V-groove 3 optical waveguide 4) and of the fiber-waveguide coupler 1, in further embodiments, the optical waveguide 4 can fabricated on the top surface 2a such that it at least partly covers at least one of the V-groove 3 and the optical waveguide 4.

In Fig. 4a, it can be seen that the optical waveguide 4 is disposed such that the waveguide core 41 is arranged along the Z-direction Z in a projection towards the top surface 2a, which is in this case parallel to the top surface at a predetermined height H. For the fabrication of the optical waveguide 4 on the crystalline substrate 2, several fabrication steps are typically applied starting with a deposition e.g. of an oxide, followed by lithography and then etching. Such steps are typically known in the field of lithography. These steps usually involve a deposition of oxides, lithography and subsequent etching using an adapted mask and etchants.

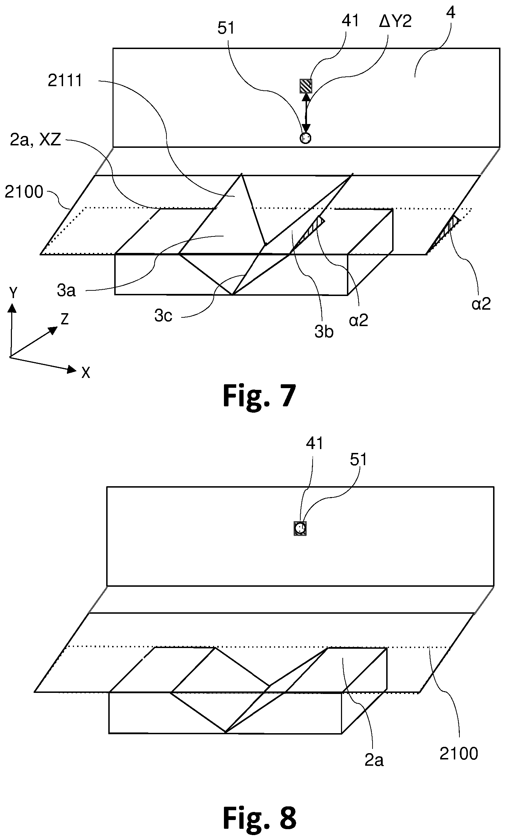

Although the embodiment in Fig. 4a-c has been described with a substrate having a misalignment between the top surface 2a and a (100) crystallographic plane 2110 in a X/Y-plane XY normal to the Z-direction Z by a first angle α1, in further embodiments, the substrate 2 further has a misalignment between the top surface 2a and a (100) crystallographic plane 2110 in a Y/Z-plane YZ normal to the X-direction X by a second angle α2, as will be described below with reference to Fig. 7 and 8.

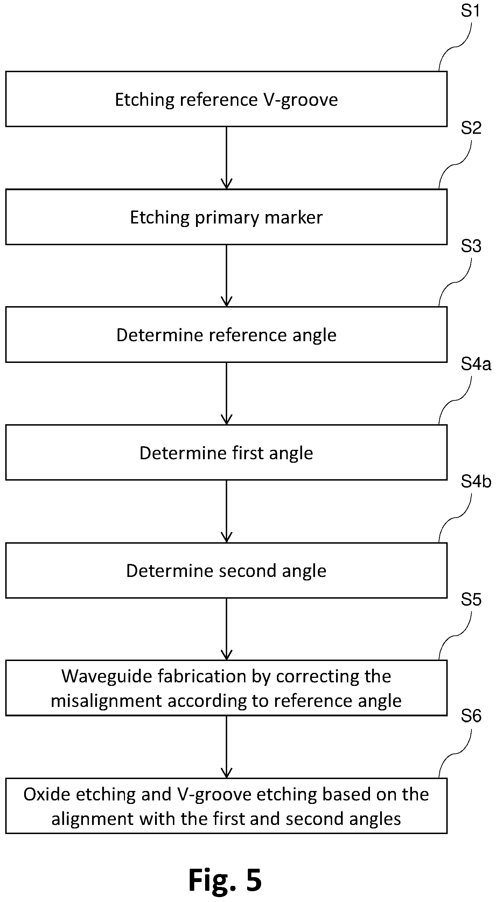

Fig. 5 shows a flow chart for a method for manufacturing of a fiber-waveguide coupler 1 according to an embodiment of the invention.

The method for manufacturing a fiber-waveguide coupler 1 comprises the step of etching S1 a reference V-groove 6 into a top surface 2a of a crystalline substrate 2 of a (100) type by anisotropic etching, wherein the anisotropic etching is conducted such that reference V-groove 6 extends along a Z-direction Z in a projection towards the top surface 2a, wherein the Z-direction is within a (110) crystallographic plane 2110 of the crystalline substrate 2. The method further includes the step of etching S2 a primary marker 7 extending along a reference direction R into the top surface 2a.

Having completed these steps, the reference angle αR between the Z-direction Z and the reference direction R is now determined S3. Further, a first angle α1 between the top surface 2a and a (100) crystallographic plane 2100 of the crystalline substrate 2 in a projection towards a X/Y-plane XY normal to the Z-direction Z is determined S4a. Alternatively or in addition to the previous step, a second angle α2 between the top surface and the (100) crystallographic plane 2100 in an Y/Z-plane YZ normal to the X-direction X is determined S4b.

After this determination step, an optical waveguide 4 is fabricated S5 on the top surface 2a of the crystalline substrate 2 based on the reference angle αR such that a fiber core 51 of an optical fiber 5 having predetermined dimensions being set into the second V-groove 3 is aligned with a waveguide core 41 of the optical waveguide 4. A position of the optical waveguide 4 is set based on a position of a second V-groove V and an orientation of a second V-groove V is set based on the determined first angle α1 and second angle α2. This fabrication step typically involves several fabrication steps starting with a deposition e.g. of an oxide, followed by lithography and then etching, which are commonly known in the field.

Furthermore, the second V-groove 3 extending along the Z-direction Z is etched S5 into the top surface 2a by anisotropic etching. Similar to the reference groove 6, the second V-groove 3 thus also extends along the Z-direction in a projection towards the top surface 2a. A width W of the second V-groove 3 at the top surface 3 in an X-direction X and a depth D of the second V-groove 3 in the Y-direction Y from the top surface 2a is set based on the determined first angle α1. In this embodiment, prior to the etching of the V-groove, the oxide parts not needed and deposited in the previous fabrication step for placing the optical waveguide at the correct height H on the substrate 2, is etched based on the alignment with the reference angle αR, preferably by the first and/or second angles α1, α2 as well.

It is noted that the order of the first two steps S1, S2, the third and the fourth steps S3, S4a and/or S4b and the fifth and the sixth steps S5, S6 is arbitrary and can be mutually opposite to as it is shown in Fig. 7.

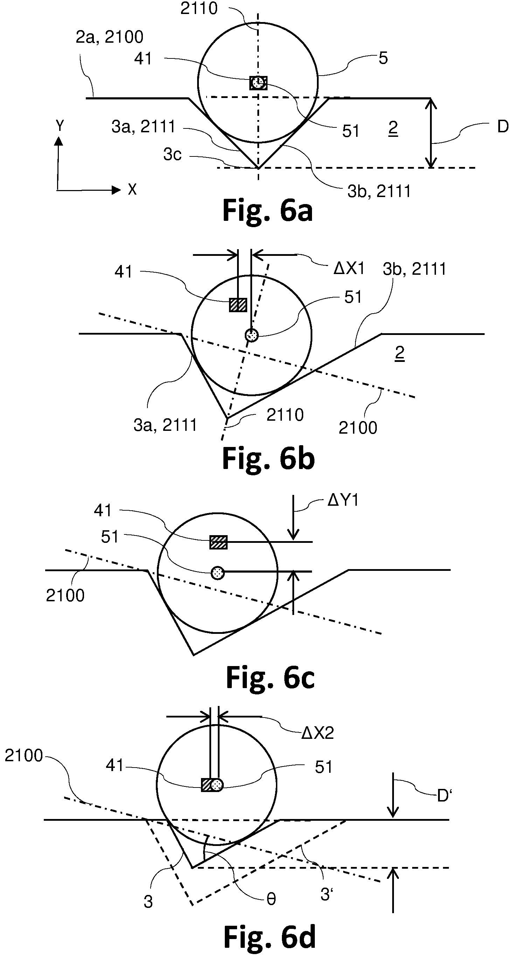

Fig. 6a-d show a cross sections of a V-groove of a fiber-waveguide coupler 1 according to a further embodiment of the invention.

Fig. 6a shows the ideal case for illustrative purpose, in which the top surface 2a of the crystalline substrate is a (100) crystallographic plane. In this case, the cross section in the X/Y-plane XY orthogonal in this case to a length direction of the V-groove shows a symmetric V-groove 3. As can be seen, the V-groove 3 includes a first inclined surface 3a and a second inclined surface 3b opposing the first inclined surface 6a. In such a symmetric V-groove 3, the first inclined surface 3a is of the same size as the second inclined surface 3 of the V-groove 3 the X/Y-plane XY. Furthermore, the anisotropic etching of the V-groove 3 is typically conducted such that the first and second inclined surfaces 3a, 3b are in a (111) crystallographic plane 2111 of the crystalline substrate 2. A trench axis 3a where the first and second inclined surfaces 3a, 3b meet, extends in a (110) crystallographic plane 2110, which is orthogonal to the top surface 2a.

In Fig. 6b, an asymmetric cross section of the V-groove 3 due to an existing first angle α1 is shown. As shown in Fig. 6b, a displacement ΔX1 in the X-direction resulting from the determined reference angle αR is created that needs to be calculated. The optical waveguide 4 can then be disposed such that a waveguide core 41 of the optical waveguide 4 is positioned based on the first X-displacement ΔX1 on a first corrected X-position, i.e. in that it compensated the first displacement ΔX1. Note that in this scenario, the (110) crystallographic plane 2110 is not orthogonal to the top surface 2a anymore.

In Fig. 6c, it is shown that a depth displacement ΔY1 is created due to the existing first angle α1. Thus, a corrected depth D that considers the depth displacement ΔY1 of the second V-groove 3 based on the determined first angle α1 and the measurement as explained with reference to Fig. 3 is calculated and the V-groove 3 etched correspondingly, e.g. by adapting the amount of etchant accordingly.

In Fig. 6d, it is shown that even after correcting the depth to the depth displacement ΔY1, a second displacement ΔX2 is created to the lower corrected depth D' with respect to the original depth D. In order to correct the second X-displacement ΔX2, a second corrected X-position based on the corrected depth D' is calculated using geometric relations of the V-groove. In particular, the first and second inclined surfaces 3a, 3b of the V-groove 3 in Fig. 6a-d are in (111) crystallographic plane, so that an angle θ of an inclined surface 3a, 3b with respect to the (100) crystallographic plane in the X/Y-plane XY is about 54.7°. With this information, the second displacement ΔX2 can be derived using the known first angle α1. The optical waveguide 4 is disposed such that the waveguide core 41 is positioned based on the second X-displacement ΔX2.

It is noted that an orientation of an etching mask for the optical waveguide 4 on the top surface 2a is based on the determined reference angle αR. The optical waveguide 4 is disposed such that the waveguide core 41 of the optical waveguide 4 is extending along the Z-direction Z in a projection towards the top surface 2a.

Fig. 7 shows a schematic illustration of an exemplary fiber-waveguide coupler for illustration purposes.

In the embodiment shown in Fig. 7, the top surface 2a and a (100) crystallographic plane 2100 of the crystalline substrate 2 open a second angle α2 in a Y/Z-plane YZ. The Y/Z-plane YZ is defined by an opening of a normal to the top surface 2a and the Z-direction Z. As a result, the trench axis 3c of the V-groove 3, where the first and second inclined surfaces 3a, 3b meet each other, is not parallel to the Z-direction anymore. Precisely speaking, the trench axis 3c and the Z-direction open the same second angle α2.

As can be seen in Fig. 7, the shown misorientation induces a relatively significant displacement ΔY2 along the Y-direction of the fiber core 51 of an optical fiber 5 (not shown in Fig. 8) relative to the waveguide core 41 of the optical waveguide 4. This displacement ΔY2 is primarily associated with the depth D of the V-groove 3, which varies along the edges of the V-groove 3. For instance, with a second angle α2 of 1 degree, the displacement along the Y-direction Y may easily be approximately up to 35 µm. The notable displacement ΔY2 is mainly attributed to the length of the V-groove 3, which may be on the order of 2 mm.

Fig. 8 shows a schematic illustration of a fiber-waveguide coupler according to a further embodiment of the invention.

Fig. 8 shows, for reasons of comparison and illustration, the case of a non-existing second angle α2 between the top surface 2a and the a (100) crystallographic plane 2100. In this case, the with W of the V-groove 3 is constant. A fiber core 51 of an optical fiber 5 (not shown in Fig. 8) with predetermined dimensions set into the V-groove 3 will be aligned with the waveguide core 41 in the X/Y plane.

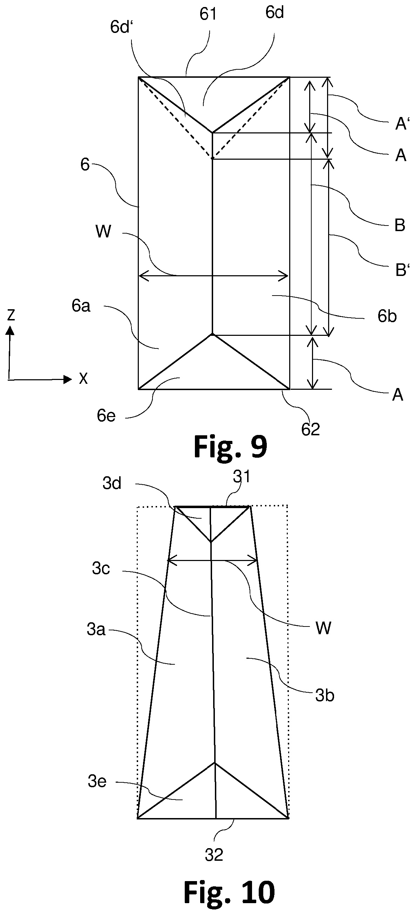

Fig. 9 shows a top view of an exemplary reference V-groove 6 for illustration purposes.

For determining the second angle α2 between the top surface and the (100) crystallographic plane 2100 in an Y/Z-plane YZ normal to the X-direction X, the dimensions of the reference V-groove 6 have to be determined by microscopy, e.g. CD-SEM, as described elsewhere above.

As can be seen in Fig. 9, besides first and second inclined surfaces 6a, 6b, the reference V-groove 6 has a third and fourth inclined surfaces 6d, 6e near at first and second ends 61, 62 of the reference V-groove 6. In case of an existing second angle α2, a projection of an end portion A' in the Z-direction of e.g. the third inclined surface 6d may be larger due to the second angle α2 than a projection of an ideal end portion A would be, i.e. the reference V-groove is deeper at the first end 61. For the same reason, a projection of a center portion B' of the reference V-groove 6, at which the trench axis 63 is at the bottom of the reference V-groove 6, is shorter than a projection of an ideal center portion B would be.

By measuring the extent of the difference between the projection of the end portion A' to the projection of the ideal end portion A and/or the difference between the projection of the center portion B' to the projection of the ideal center portion B, the second angle α2 can be derived.

Fig. 10 shows a top view of a V-groove 3 of a fiber-waveguide coupler 1 according to a further embodiment of the invention.

Fig. 10 shows a V-groove 3 that has been corrected for a second angle α2. This V-groove 3 has been manufactured as a result of a calculation indicating a relationship between the second angle α2 and the width W of the V-groove 3. This calculation leads to specifying the width on each end 31, 32 of the V-groove 3 to avoid the misorientation effect on the alignment of the center of the optical fiber 5 and the optical waveguide 4. This is achieved by maintaining a consistent depth D across the entire length of the V-groove 3.

It can be seen that a width W of the V-groove 3 at the top surface 2a varies along its length according to the second angle α2 gradually. The second V-groove 3 is thus etched such that the width W of the second V-groove 3 is gradually varying based on the determined second angle α2.

More precisely speaking, the second V-groove 3 is etched such that a trench axis 3c, at which the first and second inclined surfaces 3a, 3b of the second V-groove 3 meet, is in a (100) crystallographic plane 2 of the crystalline substrate 2. In this scenario, the trench axis 3c of the V-groove 3, at which the first and second inclined surfaces 3a, 3b meet, is in a (100) crystallographic plane 2100 of the crystalline substrate 2.

It can be seen in Fig. 10 that the third inclined surface 3d near the first end 31 of the V-groove 3 is smaller than a fourth inclined surface 3e near the second end 32 of the V-groove 3. The optical waveguide 4 can be fabricated accordingly onto the top surface 2a of the substrate 2.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF USED REFERENCE SIGNS

- 1: fiber-waveguide coupler
- 2: crystalline substrate
- 2a: top surface
- 20: notch
- 2100: (100) crystallographic plane
- 2110: (110) crystallographic plane
- 2111: (111) crystallographic plane
- 3: (second) V-groove
- 31: first end of V-groove
- 32: second end of V-groove
- 3a, 3b, 3d, 3e: first, second, third and fourth inclined surface of V-groove
- 3c: trench axis of the V-groove
- 4: optical waveguide
- 41: waveguide core
- 42: end of the optical waveguide
- 5: optical fiber
- 51: fiber core
- 52: fiber tip
- 6: reference V-groove
- 61: first end of reference V-groove
- 62: second end of reference V-groove
- 6a, 6b, 6d, 6e: first, second, third and fourth inclined surface of reference V-groove
- 6c: trench axis of the reference V-groove
- 7: primary maker
- A: end portion of V-groove
- B: center portion of V-groove
- d: predetermined distance optical fiber to optical waveguide
- H: height waveguide core above top surface
- K1, K2: projection of first, second inclined surface on top surface
- R: reference direction
- W: width of V-groove
- X, Y, Z: Directions
- XY, XZ, YZ: Planes

- αR: reference angle
- α1: first angle
- α2: second angle
- θ: angle of the inclined surface of the V-groove to the top surface
- ΔX1, ΔX2: first and second X-displacement
- ΔY1, ΔY2: displacements in the Y-direction

## Claims

1. Fiber-waveguide coupler (1), comprising
a crystalline substrate (2) of a (100) type having a top surface (2a) and a crystallographic (100) plane (2100),
the crystalline substrate (2) comprising:
a V-groove (3) extending in a Z-direction (Z) in a projection towards the top surface (2a), wherein the Z-direction (Z) is within a (110) crystallographic plane (2110) of the crystalline substrate (2), wherein the top surface (2a) and a (100) crystallographic plane (2110) of the crystalline substrate (2) open a first angle (α1) in a X/Y-plane (XY) normal to the Z-direction(Z), and
an optical waveguide (4) disposed on the top surface (2a) of the crystalline substrate(2), the optical waveguide (4) extending along the Z-direction (Z) in a projection towards the top surface (2a),
wherein the V-groove (3) and the optical waveguide (4) are configured such that when an optical fiber (5) of predetermined size and having a fiber core (51) and a fiber tip (52) is set into the V-groove (3) such that a distance between an outer end (42) of the waveguide core (4) and the fiber tip (52) is less than a predetermined distance (d), the fiber core (51) is aligned with the waveguide core (41) such that a displacement of the fiber core (51) and the waveguide core (41) is less than a predetermined displacement.

2. Fiber-waveguide coupler (1) according to claim 1, wherein the top surface (2a) and a (100) crystallographic plane (2100) of the crystalline substrate (2) open a second angle (α2) in a Y/Z-plane (YZ), which is opened by a normal to the top surface (2a) and the Z-direction (Z), wherein a width (W) of the V-groove (3) at the top surface (2a) varies, in particular gradually, along its length according to the second angle (α2).

3. Fiber-waveguide coupler (1) according to claim 2, wherein a trench axis (5c) of the V-groove (3), at which the first and second inclined surfaces (3a, 3b) meet, is in a (100) crystallographic plane (2100) of the crystalline substrate (2).

4. Method for manufacturing a fiber-waveguide coupler (1), comprising
etching (S1) a reference V-groove (6) into a top surface (2a) of a crystalline substrate (2) of a (100) type by anisotropic etching, wherein the anisotropic etching is conducted such that reference V-groove (6) extends along a Z-direction (Z) in a projection towards the top surface (2a), wherein the Z-direction is within a (110) crystallographic plane (2110) of the crystalline substrate (2);
etching (S2) a primary marker (7) extending along a reference direction (R) into the top surface (2a);
determining (S3) a reference angle (αR) between the Z-direction (Z) and the reference direction (R);
determining (S4a) a first angle (α1) between the top surface (2a) and a (100) crystallographic plane (2100) of the crystalline substrate (2) in a projection towards a X/Y-plane (XY) normal to the Z-direction (Z), and/or
determining (4b) a second angle (α2) between the top surface and the (100) crystallographic plane (2100) in an Y/Z-plane (YZ) normal to the X-direction (X);
fabricating (S5) an optical waveguide (4) on the top surface (2a) of the crystalline substrate (2) based on the reference angle (αR) such that a fiber core (51) of an optical fiber (5) having predetermined dimensions being set into a second V-groove (3) is aligned with a waveguide core (41) of the optical waveguide (4), and
etching (S6) the second V-groove (3) into the top surface (2a) by anisotropic etching, wherein a width (W) of the second V-groove (3) at the top surface (3) in an X-direction (X) and a depth (D) of the second V-groove (3) in the Y-direction (Y) from the top surface (2a) is set based on the determined first angle (α1) and/or the second angle (α2).

5. Method according to claim 4, wherein the reference V-groove (6) includes a first inclined surface (6a) and a second inclined surface (6b) opposing the first inclined surface (6a), wherein the anisotropic etching is conducted such that the first and second inclined surfaces (6a, 6b) are in a (111) crystallographic plane (2111) of the crystalline substrate (2).

6. Method according to any of claims 4 or 5, wherein etching a second V-groove (3) includes:
calculating a depth displacement (ΔD) of the second V-groove (3) based on the determined first angle (α1).

7. Method according to any of claims 4 to 6, wherein fabricating the optical waveguide (4) includes:
setting an orientation of an etching mask on the top surface based on the determined reference angle (αR),
fabricating the optical waveguide (4) such that a waveguide core (41) of the optical waveguide (4) is extending along the Z-direction (Z) in a projection towards the top surface (2a).

8. Method according to any of claims 4 to 7, wherein fabricating the optical waveguide (4) includes:
calculating a first X-displacement (ΔX1) based on the determined reference angle (αR); and
fabricating the optical waveguide (4) such that the waveguide core (41) of the optical waveguide (4) is positioned based on the first X-displacement (ΔX1).

9. Method according to claim 8, wherein fabricating the optical waveguide (4) includes:
calculating a second X-displacement (ΔX2) based on the depth displacement (ΔD); and
fabricating the optical waveguide (4) such that the waveguide core (41) is positioned based on the second X-displacement (ΔX2);

10. Method according to any of claims 4 to 9, wherein fabricating the optical waveguide (4) includes:
fabricating the optical waveguide (4) such that the waveguide core (41) is arranged along the Z-direction (Z) in a projection towards the top surface (2a).

11. Method according to any of claims 5 to 10, wherein etching the second V-groove (3) includes:
etching the second V-groove (3) such that a trench axis (3c), at which the first and second inclined surfaces (3a, 3b) of the second V-groove (3) meet, is in a (100) crystallographic plane (2) of the crystalline substrate (2).
